# EUROPÄISCHE PATENTSCHRIFT

(11) **EP 2 871 081 B1**
(45) Veröffentlichungstag und Bekanntmachung des Hinweises auf die Patenterteilung: **04.01.2017**
(21) Anmeldenummer: 14003184.0
(22) Anmeldetag: 15.09.2014
(51) Int. Cl.: B60D 1/24, B60D 1/06, B60D 1/48, B60D 1/54

(54) **Anhängekupplung mit einer Trägeranordnung**
Drawbar with a support assembly
Attelage doté d'un système support

(30) Priorität: 08.11.2013 DE 102013018771
(43) Veröffentlichungstag der Anmeldung: 13.05.2015
(73) Patentinhaber: WESTFALIA - Automotive GmbH, 33378 Rheda-Wiedenbrück (DE)
(72) Erfinder: Bachmann, Horst, 44793 Bochum (DE); Becker, Wilfried, 33397 Rietberg (DE); Domke, Friedrich, 33442 Herzebrock-Clarholz (DE); Lubritz, Marcel, 33602 Bielefeld (DE); Wellnitz, Heinrich, 33378 Rheda-Wiedenbrück (DE); Wyrwich, Martin, 33378 Rheda-Wiedenbrück (DE)
(74) Vertreter: Patentanwälte Bregenzer und Reule Partnerschaftsgesellschaft mbB

(56) Entgegenhaltungen:
- DE-C1- 4 411 496
- DE-U- 7 325 210
- DE-U1-202006 008 463
- FR-A1- 2 956 064
- US-A- 4 456 279

## Beschreibung

Die Erfindung betrifft eine Anhängekupplung für ein Kraftfahrzeug gemäß dem Oberbegriff des Anspruchs 1.

Eine derartige Anhängekupplung ist beispielsweise in DE 20 2006 008 463 U1 erläutert.

Eine zum Beispiel in EP 1 650 059 A1 erläuterte Anhängekupplung weist eine Fahrzeughalterung mit einem Gehäuse auf, das anhand von Laschen mit einem Querträger verbunden ist. Die Laschen sind beispielsweise mit dem Gehäuse verschweißt. Eine derartige Konstruktion ist jedoch sehr aufwändig und insbesondere nicht reparaturfreundlich. Daher ist es auch üblich, dass die Fahrzeughalterung am Querträger verschraubt wird.

Es ist daher die Aufgabe der vorliegenden Erfindung, ein vereinfachtes Befestigungskonzept für eine Anhängekupplung an einem Querträger einer Trägeranordnung bereitzustellen.

Zur Lösung der Aufgabe ist eine Anhängekupplung gemäß der technischen Lehre des Anspruchs 1 vorgesehen.

Mit dem Fahrzeughaltekörper ist die Anhängekupplung mit dem Kraftfahrzeug verbunden.

Es ist ein Grundgedanke dabei, dass anhand des Schraubbolzens, der sozusagen ein zentrales Befestigungselement darstellt, mit einer einfachen Bedienhandlung die gesamte Baueinheit der Fahrzeughalterung am Querträger befestigt wird. Man muss nur eine einzige Schraube oder Mutter betätigen, um die Fahrzeughalterung am Querträger und somit am Kraftfahrzeug zu befestigen.

Der eigentliche Kraftschluss zwischen der Fahrzeughalterung und dem Querträger wird durch den Schraubbolzen bereitgestellt, während die Verdrehsicherung den Formschluss darstellt.

Der Querträger kann in an sich bekannter Weise ein Profilkörper, insbesondere ein Hohlprofil, sein. Der Profilkörper kann einen geschlossenen oder seitlich offenen, z.B. U-förmigen, Querschnitt haben.

Beispielsweise hat der Querträger eine im Querschnitt polygonale oder runde Außenkontur.

Die Verdrehsicherung kann in unterschiedlichster Form ausgestaltet sein, wobei nachfolgend einige Varianten beschrieben sind. Diese Varianten können selbstverständlich auch in Kombination miteinander vorgesehen sein.

Eine in der Zeichnung dargestellte Ausführungsform der Erfindung sieht vorteilhaft vor, dass die Verdrehsicherung einen bolzenartigen Verdrehsicherungsvorsprung umfasst, der sich zwischen dem Querträger und dem Fahrzeughaltekörper erstreckt. Beispielsweise ist der Verdrehsicherungsvorsprung am Fahrzeughaltekörper angeordnet und steht in Richtung des Querträgers vor.

Dort greift der Verdrehsicherungsvorsprung beispielsweise in die Wand ein, welche die erste Querträger-Stützfläche bereitstellt. Es ist auch möglich, dass der Verdrehsicherungsvorsprung diese Wand durchdringt oder in diese eindringt. Weiterhin ist es vorteilhaft, wenn der Verdrehsicherungsvorsprung eine Spitze hat, die sich sozusagen von selbst beim Anziehen der Verschraubung des Schraubbolzens (des Schraubbolzens selbst oder einer Mutter) in die Querträger-Stützfläche hinein arbeitet, in diese beispielsweise mit der Spitze eindringt.

Der Verdrehsicherungsvorsprung ist beispielsweise in die Fahrzeughalter-Montagefläche eingesteckt oder eingepresst oder eingeschraubt. Es ist aber auch möglich, dass der Verdrehsicherungsvorsprung einstückig mit der Fahrzeughalter-Montagefläche ist. Weiterhin ist es denkbar, dass mehrere Verdrehsicherungsvorsprünge in dieser Art vorgesehen sind.

Die Verdrehsicherung umfasst beispielsweise Verdrehsicherungsformschlusskonturen, zum Beispiel Prägestrukturen, Riffelungen oder dergleichen, die an der Fahrzeughalter-Montagefläche und/oder der ihr zugewandten ersten Querträger-Stützfläche vorgesehen sind.

Es ist aber auch möglich, das Umfangskonturen am Querträger und der Fahrzeughalterung die Verdrehsicherung darstellen, indem sie formschlüssig ineinander greifen. Beispielsweise ist an der Fahrzeughalter-Montagefläche eine Vertiefung vorhanden oder ist diese als eine Vertiefung ausgestaltet und dient zur formschlüssigen Aufnahme des Querträgers. Der Querträger kann beispielsweise in einer Art Rinne oder Mulde der Fahrzeughalterung verdrehsicher aufgenommen sein, während der Schraubbolzen den festen Halt der beiden Komponenten aneinander, zum Beispiel eine Zugfestigkeit, darstellt.

Es ist vorgesehen, dass die Anhängekupplung ein Distanzelement, zum Beispiel eine Distanzhülse, umfasst. Das Distanzelement stützt sich mit einem Längsende an einer Innenseite einer ersten Wand des Querträgers ab, die außenseitig die erste Querträger-Stützfläche bereitstellt. Der Querträger ist in diesem Fall ein Profilträger, das heißt er ist innen hohl. Im Innenraum des Querträgers ist das Distanzelement angeordnet. Mit seinem zweiten Längsende stützt das Distanzelement den Kopf des Schraubbolzens oder die aufgeschraubte Mutter ab. Es kann zwischen dem Kopf und dem zweiten Längsende beispielsweise auch eine Unterlegscheibe vorgesehen sein. Das zweite Längsende fluchtet vorzugsweise mit der zweiten Querträger-Stützfläche oder ist jedenfalls im zumindest noch nicht gespannten Zustand des Schraubbolzens unwesentlich hinter die zweite Querträger-Stützfläche zurück versetzt, so dass sich der Kopf oder die Mutter neben dem zweiten Längsende des Distanzelements an der zweiten Querträger-Stützfläche abstützt. Das Distanzelement verhindert, dass der Schraubbolzen bzw. die Mutter den Querträger sozusagen zusammen drückt und sorgt für eine gleichmäßige Kraftverteilung.

An der Fahrzeughalter-Montagefläche ist zweckmäßigerweise eine Aufnahme, zum Beispiel eine Schraubaufnahme, für den Schraubbolzen vorgesehen. Es ist auch möglich, dass der Schraubbolzen mit der Fahrzeughalter-Montagefläche einstückig ist oder mit dieser verschweißt, verklebt oder in sonstiger Weise stoffschlüssig verbunden ist.

Selbstverständlich braucht der Schraubbolzen nicht über seine gesamte Längslänge mit einer Schraubkontur bzw. einem Gewinde versehen sein. Es genügt, wenn er dort, wo er beispielsweise in die Montagefläche des Fahrzeughalters eingeschraubt ist oder wo die Mutter aufgeschraubt ist, mit einem Gewinde versehen ist. Es ist ferner möglich, dass der Schraubbolzen einerseits in den Fahrzeughalter eingeschraubt ist, andererseits mit einer Mutter verschraubt ist, die dann den Kopf darstellt. Mit anderen Worten ist beispielsweise ein Schraubbolzen möglich, der an seinen beiden Längsendbereichen mit einem Gewinde versehen ist.

Ein Durchmesser des Schraubbolzens ist zweckmäßigerweise sehr groß. Bevorzugt ist es, wenn der Durchmesser mindestens die Hälfte, vorzugsweise mindestens zwei Drittel der Querbreite der Fahrzeughalter-Montagefläche hat. Mithin wird also ein massiver Schraubbolzen verwendet, der in Bezug auf Zugfestigkeit und Scherfestigkeit optimal ist.

Bevorzugt ist eine Führungsanordnung, zum Beispiel eine Kulissenführung, zur Führung des Kupplungsarms zwischen der Gebrauchsstellung unter Nichtgebrauchsstellung vorgesehen. Die Führungsanordnung ist vorzugsweise an dem Fahrzeughaltekörper angeordnet. Die Führungsanordnung kann beispielsweise ein Führungsgehäuse, zum Beispiel einen Kulissenkasten, umfassen.

Eine andere Ausführungsform der Erfindung, die in der Zeichnung nicht dargestellt ist, kann vorsehen, dass der Kupplungsarm lösbar an der Fahrzeughalterung angeordnet ist, zum Beispiel dass die Fahrzeughalterung eine Steckaufnahme zum Einstecken oder Einstecken des Kupplungsarms aufweist.

Der Fahrzeughaltekörper ist zweckmäßigerweise in der Art eines Halteblocks ausgestaltet.

Mithin ist es vorteilhaft, wenn der Fahrzeughaltekörper eine massive, blockartige Gestalt hat.

Vorteilhaft ist der Kupplungsarm an der Fahrzeughalterung anhand einer Lageranordnung zwischen einer zum Anhängen des Anhängers oder Tragen des Hecklastenträgers vorgesehenen Gebrauchsstellung und einer zum Kraftfahrzeug näher hin verstellten Nichtgebrauchsstellung um zumindest eine Schwenkachse schwenkbar und/oder eine Stellachse verschieblich gelagert.

Die Anhängekupplung weist dabei zweckmäßigerweise eine Fixiereinrichtung zum Fixieren des Kupplungsarms an der Fahrzeughalterung auf, wobei die Anhängekupplung zum Halten des Kupplungsarms an der Fahrzeughalterung in der Gebrauchsstellung und/oder der Nichtgebrauchsstellung als einer Fixierstellung an der Fahrzeughalterung und dem Kupplungsarm angeordnete Formschlusskonturen zu einem Formschlusseingriff miteinander aufweist, wobei mindestens ein erstes Formschlusselement und/oder ein dazu passendes erstes Gegen-Formschlusselement der Formschlusskonturen eine Krümmungskontur aufweist. Dabei ist vorgesehen, dass ein zweites Formschlusselement und ein zweites Gegen-Formschlusselement der Formschlusskonturen eine Keilflächenanordnung mit mindestens einer Keilfläche bilden, wobei in der Fixierstellung das Paar von erstem Formschlusselement und erstem Gegen-Formschlusselement in Formschlusseingriff ist und eine Bewegung des Paares von zweitem Formschlusselement und zweitem Gegen-Formschlusselement in deren Formschlusseingriff im Sinne eines Verkeilens zulässt.

Es ist ein Grundgedanke dabei, dass unterschiedliche Formschlusskonturen zum Einsatz kommen, wobei die Paarung aus erstem Formschlusselement und erstem Gegen-Formschlusselement mit gekrümmten Konturen versehen ist, was im Sinne eines leichten Lösens des Formschlusseingriffs ist, zudem aber eine Keilflächenanordnung mit mindestens einer Keilfläche, vorzugsweise mehreren, beispielsweise einander gegenüberliegenden oder entgegengesetzten Keilflächen, vorgesehen ist, die einen zuverlässigen Halt des Kupplungsarms an der Fahrzeughalterung in der Fixierstellung, beispielsweise der Gebrauchsstellung, der Nichtgebrauchsstellung oder beiden, ermöglicht. An dieser Stelle sei erwähnt, dass selbstverständlich für die Gebrauchsstellung und die Nichtgebrauchsstellung unterschiedliche Formschlusskontur-Paarungen vorgesehen sein können. Besonders vorteilhaft ist jedoch das erfindungsgemäße Konzept für die Gebrauchsstellung, in welcher ein guter und fester Halt des Kupplungsarms an der Fahrzeughalterung gewünscht ist.

Selbstverständlich kann der Kupplungsarm zwischen der Gebrauchsstellung und der Nichtgebrauchsstellung auch entlang einer Stellachse verschoben werden. Weiterhin sind mehrere Schwenkachsen möglich, um die der Kupplungsarm schwenken kann. Sogar ein Kugelgelenk ist ohne weiteres möglich. Die Lageranordnung kann auch eine Schwenk-Schiebelagerung vorsehen.

Die gekrümmte Kontur von erstem Formschlusselement und/oder erstem Gegen-Formschlusselement (nur eines der beiden kann eine gekrümmte Kontur aufweisen) ermöglicht vorteilhaft auch einen Toleranzausgleich dergestalt, dass beispielsweise der Formschlusseingriff des zweiten Paares, das heißt der Keilflächen, besser gelingt, auch wenn die Anhängekupplung teilweise verschlissen ist oder Fertigungstoleranzen auftreten.

Weiterhin hat die Keilflächenanordnung Vorteile in Bezug auf die Verdrehsicherung, das heißt der Kupplungsarm wird durch die Keilflächen oder die eine Keilfläche verdrehsicher gehalten.

Bevorzugt sind die Keilflächen im Wesentlichen quer zur Fahrtrichtung des Kraftfahrzeugs orientiert, d.h. in Fahrzeuglängsrichtung hat der Kupplungsarm dann eine optimale Abstützung an der Fahrzeughalterung über die mindestens eine Keilfläche.

Das erste Formschlusselement und/oder das erste Gegen-Formschlusselement sind beispielsweise kugelförmig oder hohlkugelförmig. Bevorzugt ist es, wenn eines der beiden Elemente eine Kugel, das andere eine Kugelkalotte umfasst. Ganz besonders bevorzugt ist es, wenn eines der beiden Elemente, das erste Formschlusselement oder das erste Gegen-Formschlusselement, ausschließlich eine Kugel darstellt, sozusagen eine zentrale Kugel, während das andere Element davon eine entsprechende zentral angeordnete Kugelkalotte darstellt.

Eine an sich eigenständige Erfindung stellt die folgende Variante, die in Kombination mit den Merkmalen des Oberbegriffes des Anspruches 1 zu sehen ist. Das erste Formschlusselement und das erste Gegen-Formschlusselement sind zumindest während der Bewegung des Kupplungsarms in den Formschlusseingriff mit der Fahrzeughalterung nahe bei der Schwenkachse angeordnet. Der Krümmungsverlauf mindestens einer der Krümmungskonturen, beispielsweise der kugelige Verlauf, verläuft bogenförmig um die Schwenkachse herum. Somit kann also das erste Gegen-Formschlusselement um das erste Formschlusselement herum schwenken.

Bevorzugt ist es, wenn die Paarung aus erstem Formschlusselement und erstem Gegen-Formschlusselement näher bei der Schwenkachse ist als das Paar von zweitem Formschlusselement und zweitem Gegen-Formschlusselement. Dies trägt vorteilhaft dazu bei, dass die Anhängekupplung leicht aus dem Formschluss zwischen erstem Formschlusselement und erstem Gegen-Formschlusselement heraus gelangen kann, während die Keilflächenanordnung einen größeren Abstand zu der Schwenkachse hat. Durch den verhältnismäßig großen Abstand der beiden zweiten Formschlusselemente zu der Schwenkachse ist ein größerer Hebel bezüglich der Schwenkachse vorhanden, d.h. deren Formschluss kann mit größerer Kraft hergestellt und/oder wieder gelöst werden.

Das erste Formschlusselement und das erste Gegen-Formschlusselement bilden vorzugsweise ein Schwenklager für eine Schwenkverstellung des zweiten Formschlusselements und des zweiten Gegen-Formschlusselements in die Fixierstellung (oder aus der Fixierstellung in eine Lösestellung) . Die Paarung aus den beiden ersten Formschlusselementen kann beispielsweise eine Art Kugellager vorsehen. Es ist aber auch möglich, dass der Krümmungsverlauf beispielsweise durch einen Zylindermantel des ersten Formschlusselements oder des ersten Gegen-Formschlusselements definiert wird, das heißt dass nur eine einachsige Schwenkbarkeit gegeben ist.

Ein Querabstand zwischen einander gegenüberliegenden ersten Formschlussflächen des Paares aus erstem Formschlusselement und erstem Gegen-Formschlusselement in der Fixierstellung ist zweckmäßigerweise größer als ein Querabstand zwischen einander gegenüberliegenden zweiten Formschlussflächen des Paares aus zweitem Formschlusselement und zweitem Gegen-Formschlusselement, wobei die ersten und zweiten Formschlussflächen gleich orientiert sind, beispielsweise etwa quer zur Fahrzeuglängsrichtung verlaufen. Der etwas größere Querabstand zwischen ersten Formschlussflächen verhindert eine statische Überbestimmung, d.h. dass in der Regel die zweiten Formschlussflächen in Kontakt miteinander gelangen und flächig aneinander anliegen, während die ersten Formschlussflächen demgegenüber zumindest ein gewisses größeres Spiel haben.

Bei dem Paar aus erstem Formschlusselement und erstem Gegen-Formschlusselement ist zweckmäßigerweise mindestens eine Schrägfläche vorgesehen. Die Schrägfläche und die mindestens eine Keilfläche des Paares von zweitem Formschlusselement und zweitem Gegen-Formschlusselement sind zweckmäßigerweise gleich geneigt. Auch die Orientierung, beispielsweise quer zur Fahrzeuglängsachse, ist vorzugsweise gleich. Bevorzugt ist es jedoch, wenn die mindestens eine Schrägfläche eine stärkere Neigung zu einer in Richtung des Formschlusseingriffs verlaufenden Stellachse als die mindestens eine Keilfläche aufweist. Somit sorgt sozusagen die Keilfläche für eine statische Bestimmung, während die Schrägfläche des ersten Formschlusselements und/oder Gegen-Formschlusselements eine größere Toleranz aufweist.

Das Paar von erstem Formschlusselement und erstem Gegen-Formschlusselement stützt den Kupplungsarm an der Fahrzeughalterung zweckmäßigerweise in einer ersten, beispielsweise etwa vertikalen Achsrichtung, ab. Die erste Achsrichtung ist beispielsweise in Z-Richtung, das heißt vertikal verlaufend. Die erste Achsrichtung verläuft zu der mindestens einen Keilfläche des zweiten Formschlusselements und des zweiten Gegen-Formschlusselements im wesentlichen parallel. Dadurch stützt also die mindestens eine Keilfläche, vorzugsweise die Keilflächenanordnung als Ganzes, d.h. also alle Keilflächen oder mehrere Keilflächen, den Kupplungsarm quer zu der ersten Achsrichtung ab, beispielsweise in Fahrzeuglängsrichtung. Unter mindestens einer Keilfläche des Paares aus zweitem Formschlusselement und Gegen-Formschlusselement verläuft zweckmäßigerweise eine Stützfläche zur Abstützung an einer Gegen-Stützfläche. Die Gegen-Stützfläche ist beispielsweise von einer Stützschulter gebildet. Mithin wirken also die Stützfläche und Gegen-Stützfläche in einer Kraftrichtung quer zur Wirk-Kraftrichtung, in welcher die Keilfläche abstützt.

Es kann vorgesehen sein, dass die mindestens eine Keilfläche zur Abstützung in einer horizontalen zweiten Achsrichtung, zum Beispiel einer X-Richtung, im Wesentlichen vertikal verläuft und/oder die Stützfläche und die Gegen-Stützfläche im wesentlichen horizontal verlaufen.

Die Paarung aus Stützfläche und Gegen-Stützfläche kann nunmehr stets wirksam sein, d.h. dass das Paar von erstem Formschlusselement und erstem Gegen-Formschlusselement, wenn es in Formschlusseingriff ist, die Stützfläche in Kontakt mit der Gegen-Stützfläche beaufschlagt. Mithin tragen also die Stützflächen zur Abstützung des Kupplungsarms beispielsweise beim Fahrbetrieb bei. Es ist aber auch die andere Variante möglich und beim Ausführungsbeispiel optional realisiert, dass nämlich die Stützfläche und die Gegen-Stützfläche in der Fixierstellung nur dann in Kontakt treten, wenn in der ersten Achsrichtung, zum Beispiel entlang einer Z-Achse, eine Stoßbelastung auftritt. Somit fangen die Stützflächen sozusagen eine Überlast auf.

Bevorzugt ist ein Fixierantrieb zum Verstellen der Formschlussanordnung in den Formschlusseingriff und/oder aus dem Formschlusseingriff vorgesehen. Der Fixierantrieb umfasst zweckmäßigerweise mindestens einen insbesondere elektrischen Antriebsmotor und/oder ein Getriebe. Weiterhin ist es möglich, dass der Formschlusseingriff durch eine Federanordnung herbeigeführt wird, das heißt dass der Fixierantrieb eine Federanordnung aufweist. Die Federanordnung dient zum Halten des Kupplungsarms in einer stabilen Lage.

Der Fixierantrieb kann zweckmäßigerweise auch ein Antrieb sein, der zum Verstellen des Kupplungsarms zwischen der Gebrauchsstellung und der Nichtgebrauchsstellung ausgestaltet ist. Mithin kann also auch ein Antrieb zum Verstellen des Kupplungsarms zwischen der Gebrauchsstellung und der Nichtgebrauchsstellung gleichzeitig den Fixierantrieb oder einen Teil davon darstellen.

Ein Antriebselement des Fixierantriebs ist zweckmäßigerweise zwischen dem Paar aus erstem Formschlusselement und erstem Gegen-Formschlusselement und dem Paar aus zweitem Formschlusselement und zweitem Gegen-Formschlusselement zwischen dem Fahrzeughalter und dem Kupplungsarm wirksam beziehungsweise greift dort an.

Besonders bevorzugt ist es, wenn die Kraftangriffspunkte sozusagen linear verlaufen. Das Antriebselement und die Paare aus den Formschlusselementen und Gegen-Formschlusselementen sind beispielsweise linear nebeneinander angeordnet.

Eine vorteilhafte Ausführungsform der Erfindung sieht vor, dass der Kupplungsarm in der Fixierstellung ausschließlich an den Paaren von erstem Formschlusselement und erstem Gegen-Formschlusselement sowie zweitem Formschlusselement und zweitem Gegen-Formschlusselement abgestützt ist. Weitere Formschlusselemente sind dann nicht vorhanden.

Eine vorteilhafte Ausgestaltung der Erfindung sieht eine Führungsanordnung, zum Beispiel eine Kulissenführung oder eine Anordnung entsprechend geneigter Schwenkachsen, zur Führung des Kupplungsarms zwischen der Gebrauchsstellung und der Nichtgebrauchsstellung vor. Die Führungsanordnung kann prinzipiell auch zu der Abstützung des Kupplungsarms in der Fixierstellung beitragen, zumindest in einem geringen Maße. Das muss aber nicht sein.

Die Führungsanordnung ist zweckmäßigerweise in einer Klemmstellung, in der die Formschlusskonturen in einem klemmenden oder ineinander gespannten Formschlusseingriff miteinander sind, zumindest im Wesentlichen, vorzugsweise ganz, kraftfrei. Selbstverständlich kann eine gewisse, kleinere Abstützung des Kupplungsarms an der Führungsanordnung auch in diesem Fall noch gegeben sein. Die Hauptlast der Abstützung des Kupplungsarms an der Fahrzeughalterung tragen jedoch die Formschlusskonturen der Formschlusselemente.

Zweckmäßigerweise ist vorgesehen, dass die Formschlusskonturen der Fahrzeughalterung an einem Fahrzeughaltekörper der Fahrzeughalterung angeordnet sind. Der Fahrzeughaltekörper weist die Formschlusskonturen vorzugsweise einstückig auf, beispielsweise in der Gestalt eines Gussteils oder Schmiedeteils. Weiterhin ist es vorteilhaft, wenn der Fahrzeughaltekörper blockartig ist. Der Fahrzeughaltekörper dient zur Befestigung der Anhängekupplung am Kraftfahrzeug.

Eine vorteilhafte Ausführungsform der Erfindung sieht vor, dass die Fahrzeughalterung mit einem einzigen Schraubbolzen mit einem Querträger einer Trägeranordnung aufweisenden und zur Befestigung am Heck des Kraftfahrzeugs verschraubt ist.
- Figur 1: eine perspektivische Schrägansicht einer Anhängekupplung gemäß der Erfindung in einer ersten Variante in Gebrauchsstellung,
- Figur 2: eine perspektivische Schrägansicht der Anhängekupplung gemäß Figur 1 in Nichtgebrauchsstellung,
- Figur 3: die Anhängekupplung gemäß Figur 2, jedoch mit von der Fahrzeughalterung entfernten Kupplungsarm,
- Figur 4: einen Teil der Fahrzeughalterung der Anhängekupplung gemäß der vorstehenden Figuren mit beinahe in Formschlusseingriff stehendem Kupplungsarm,
- Figur 5: eine Ansicht der Fahrzeughalterung gemäß Figur 4 von einer Seite her, aus der Formschlusskonturen des Kupplungsarms mit ihr in Eingriff gelangen können,
- Figur 6: einen fahrzeugseitigen Teil des Kupplungsarms der Anhängekupplung gemäß der vorstehenden Figuren,
- Figur 7: eine Seitenansicht der Anhängekupplung gemäß Figur 1,
- Figur 8: eine Schnittdarstellung der Anhängekupplung gemäß Figur 7, etwa entlang einer Schnittlinie A-A,
- Figur 9: eine Variante der Anhängekupplung gemäß Figur 1 mit einem alternativen Befestigungskonzept zur Befestigung an einer Trägeranordnung eines Kraftfahrzeugs,
- Figur 10: eine Ansicht der Anhängekupplung gemäß Figur 9, etwa entsprechend der Darstellung gemäß Figur 2,
- Figur 11: die Anhängekupplung gemäß Figuren 9-10, etwa entsprechend der Darstellung gemäß Figur 4,

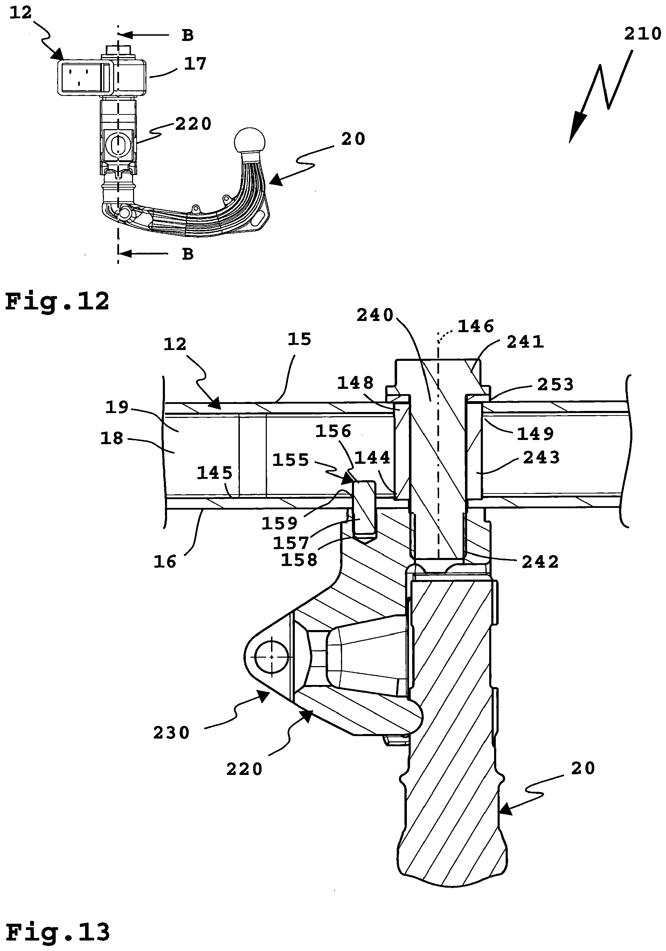

- Figur 12: eine Seitenansicht der Anhängekupplung gemäß Figuren 9-11, in einer Ansicht entsprechend Figur 7,
- Figur 13: eine Querschnittsansicht der Anhängekupplung gemäß Figur 12, etwa entlang einer Schnittlinie B-B in Figur 12.

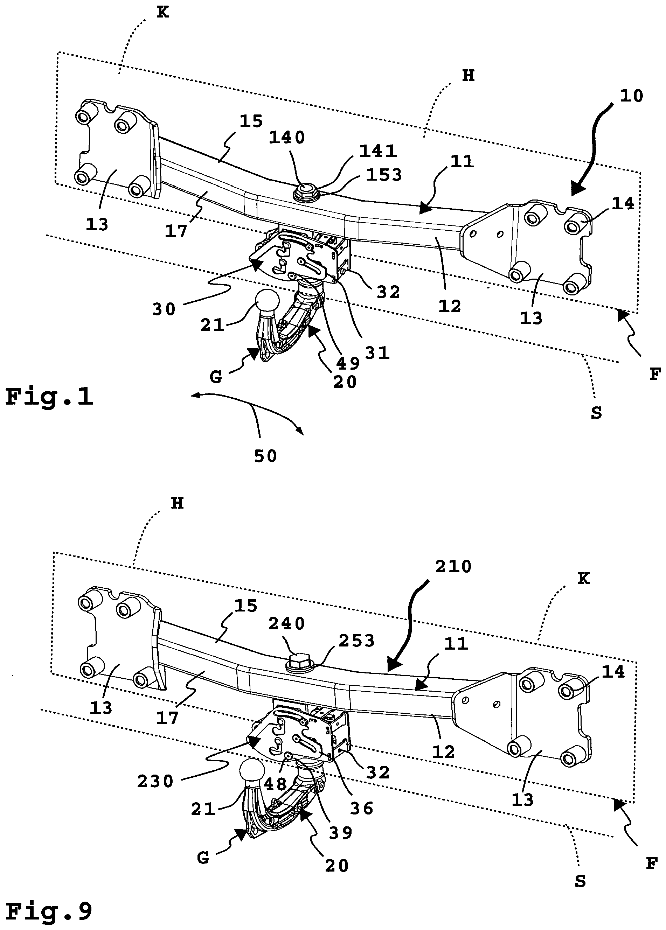

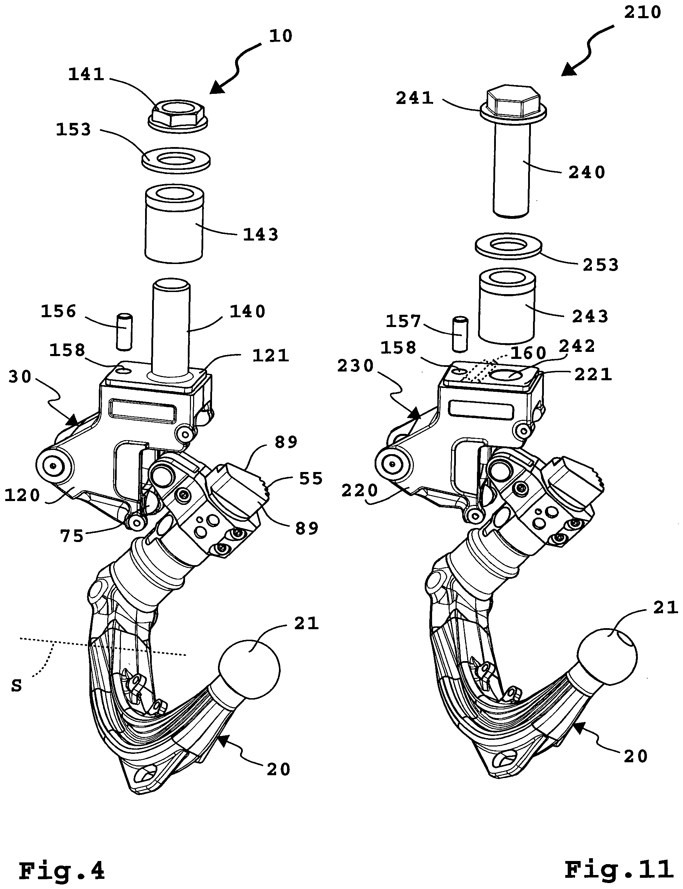

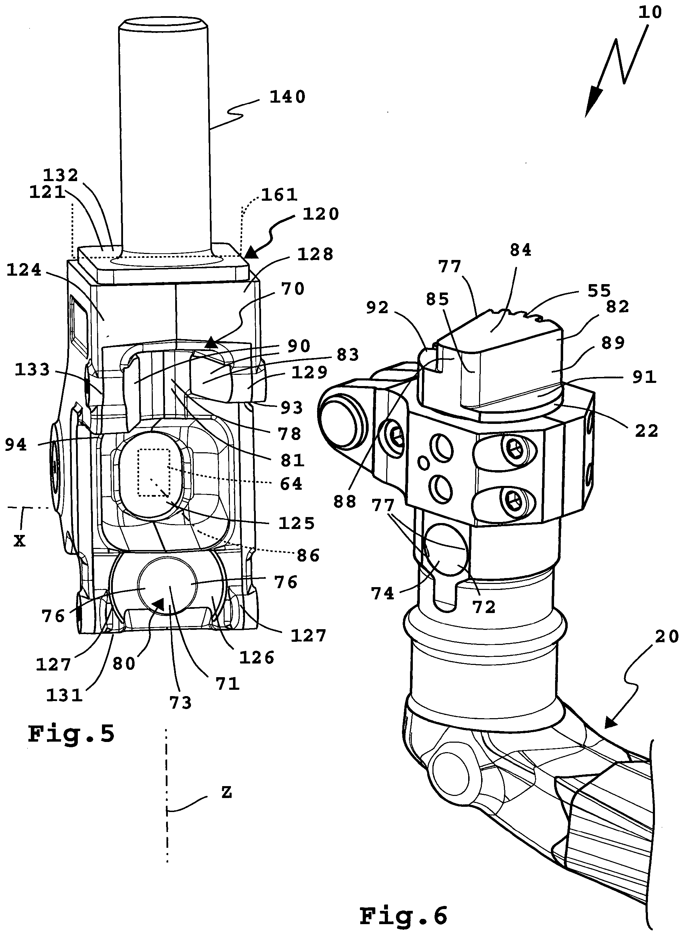

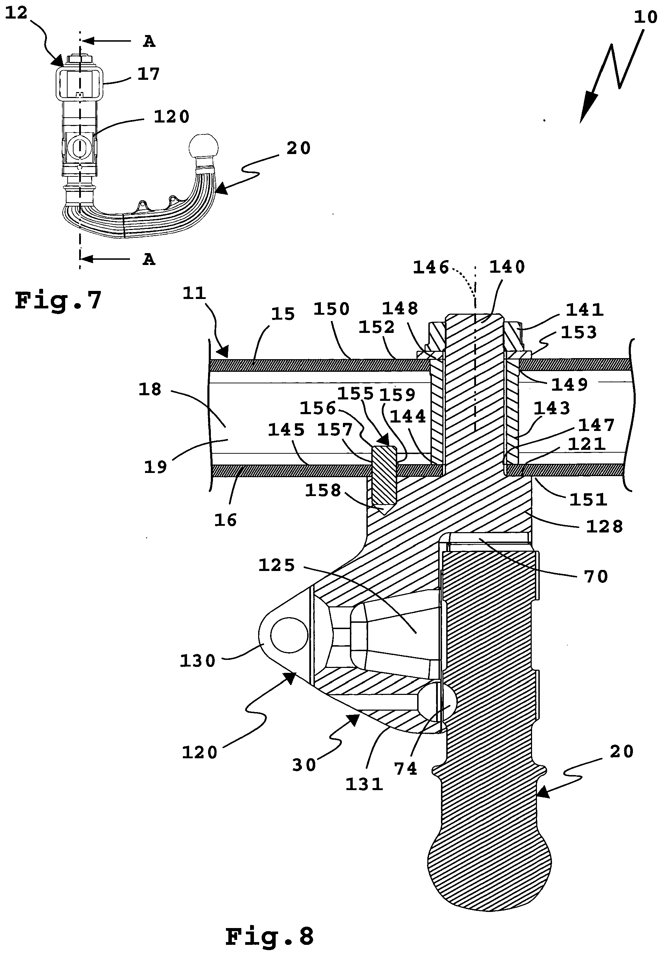

In der Zeichnung sind zwei Ausführungsformen einer erfindungsgemäßen Anhängekupplung gezeigt, wobei die Figuren 1 bis 8 die erste Variante und die folgenden Figuren die zweite Variante darstellen. Gleiche oder gleichartige Komponenten sind mit denselben Bezugsziffern versehen. Zur Verdeutlichung der Unterschiede der zweiten Variante gegenüber der ersten Variante sind bei der zweiten Variante Bezugsziffern ab 200 verwendet.

Eine Anhängekupplung 10, 210 ist an einer fahrzeugfest befestigbaren Trägeranordnung 11 angeordnet. Die Trägeranordnung 11 kann an einem Kraftfahrzeug F, nämlich dessen Heck H, befestigt werden. Ein Querträger 12 verläuft in Querrichtung des Kraftfahrzeugs F und ist mit Seitenträgern 13, beispielsweise plattenartigen oder in Fahrzeuglängsrichtung (nicht dargestellt) verlaufenden Seitenträgern, mit einer Karosserie K des Kraftfahrzeugs F verbunden. Dieses ist beispielsweise ein Kraftfahrzeug mit Verbrennungsmotor oder Elektromotor oder beidem, insbesondere ein Personenkraftwagen.

Die Seitenträger 13 sind beispielsweise anhand von Schrauben 14 mit der Karosserie K verschraubt. Während die Seitenträger 13 plattenartig sind, ist der Querträger 12 von einem Hohlprofil gebildet, das eine obere Wand 15, eine untere Wand 16 sowie in Fahrtrichtung hinten eine Wand 17 und in Fahrtrichtung vorn eine Wand 18 hat.

Ein Kupplungsarm 20 der Anhängekupplung 10, 210 weist einen Kuppelkörper 21, zum Beispiel eine Kugel, auf und ist mit einem Lagerabschnitt 22 an einer Fahrzeughalterung 30, 230 gehalten. Von dem Lagerabschnitt 22 erstreckt sich ein mittlerer Abschnitt 23 sowie ein hochstehender Abschnitt 24 des Kupplungsarms weg, d.h. insgesamt hat der Kupplungsarm 20 eine bogenförmige Gestalt, worauf es jedoch im einzelnen nicht ankommt. Am Kupplungsarm 20 sind weiterhin eine Halterung 25 für eine nicht dargestellte Steckdose sowie eine Öse 26 für ein Abreißseil vorgesehen.

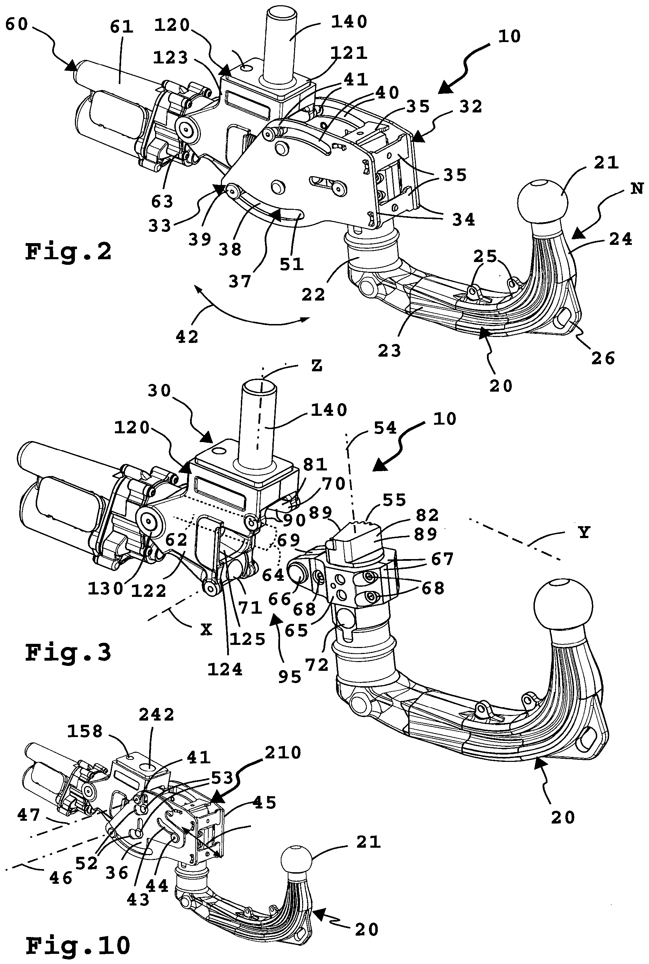

Der Kupplungsarm 20 ist an der Fahrzeughalterung 30, 230 anhand einer Lageranordnung 31 zwischen einer Gebrauchsstellung G (zum Beispiel Figur 1) und einer Nichtgebrauchsstellung N (zum Beispiel Figur 2) verstellbar. In der Gebrauchsstellung G steht der Kupplungsarm 20 nach hinten vor das Heck H des Kraftfahrzeugs F, zum Beispiel vor den Stoßfänger S, vor, so dass ein Anhänger an den Kuppelkörper 21 angekuppelt werden kann. In der Nichtgebrauchsstellung N ist der Kupplungsarm 20 zum Heck H des Kraftfahrzeugs F hin verstellt, beispielsweise hinter und/oder unter dem Stoßfänger S zurück verstellt, so dass er von hinten auf das Kraftfahrzeug F her gesehen normalerweise nicht oder kaum erblickt werden kann.

Die Fahrzeughalterung 30, 230 umfasst einen Fahrzeughaltekörper 120, 220, der am Querträger 12 festgelegt ist, beispielsweise verschraubt. Der Fahrzeughaltekörper 120, 220 dient also zur Befestigung der Anhängekupplung 10 am Kraftfahrzeug K.

Der Fahrzeughaltekörper 120, 220 gibt dem Kupplungsarm 20 in der Gebrauchsstellung G Halt, stellt also sozusagen die tragende und hauptsächlich beim Fahrbetrieb belastete Komponente dar. Die Lageranordnung 31 hingegen ist während der Verstellung des Kupplungsarms 20 zwischen der Gebrauchsstellung G und der Nichtgebrauchsstellung N im Einsatz und ist in der Gebrauchsstellung G im Wesentlichen kraftfrei oder jedenfalls kaum belastet.

Zur Verstellung des Kupplungsarms 20 zwischen der Gebrauchsstellung G und der Nichtgebrauchsstellung N dient eine Führungsanordnung 33.

Die Führungsanordnung 33 umfasst eine Kulissenführung mit einem Führungsgehäuse 32, das seinerseits schwenkbar und beweglich an dem Fahrzeughaltekörper 120, 220 gelagert ist.

Das Führungsgehäuse 32 umfasst Seitenwände 34, die parallel zu Seitenwänden 122 des Fahrzeughaltekörpers 120, 220 verlaufen. Die beiden Seitenwände 34 sind durch Querverbinder 35 an der vom Fahrzeughaltekörper 120, 220 entfernten oder abgewandten Seite miteinander verbunden. Die Querverbinder 35 sind ebenso wie die Seitenwände 34 zweckmäßigerweise als Blechteile oder jedenfalls dünne Wandteile ausgestaltet. Einer der Querverbinder 35 erstreckt sich beispielsweise an einer Oberseite des Gehäusekastens oder Führungsgehäuses 32 und verbindet dort die beiden Seitenwände 34. In der Gebrauchsstellung G verlaufen die beiden Querverbinder 35, die vorzugsweise plattenartig sind, etwa frontal und parallel zu einer Frontseite 124 des Fahrzeughaltekörpers 120, 220.

An den Seitenwänden 34 ist außenseitig jeweils ein Kulissenkörper 36 in Gestalt einer Platte vorgesehen, der die Bewegung des Kupplungsarms 20 bezüglich des Führungsgehäuses 32 und zudem auch die Bewegung des Führungsgehäuses 32 bezüglich des Fahrzeughaltekörpers 120, 220 führt und lenkt.

Eine Kulissenanordnung 37 der Lageranordnung 31 umfasst zum Beispiel Schwenkkulissen 38 an den Seitenwänden 34, in die Kulissenfolger 39 eingreifen. Die Kulissenfolger 39 stehen seitlich vor die Fahrzeughaltekörper 120, 220 vor, beispielsweise in der Nähe der Unterseiten 131 der Fahrzeughaltekörper 120, 220.

In gleicher Weise stehen Kulissenfolger 41 vor die Seitenwände 122 der Fahrzeughaltekörper 120, 220 vor und greifen in Schwenkkulissen 40 der Seitenwände 34 ein. Die Kulissenfolger 41 sind in der Nähe einer Oberseite 132 des Fahrzeughaltekörpers 120, 220 vorgesehen.

Die Kulissenfolger 41 und/oder die Kulissenfolger 39 sind vorzugsweise bolzenartig oder stiftartig.

Längsachsen der Kulissenfolger 39, 41 verlaufen in Richtung einer Schwenkachse 46 und einer Schwenkachse 47, um die der Kulissenkasten oder das Führungsgehäuse 32 zwischen der Gebrauchsstellung G und der Nichtgebrauchsstellung N sequenziell schwenkt.

In der in den Figuren 2 und 10 dargestellten Position ist der Kulissenfolger 41 in einer Aufnahme 49 des Kulissenkörpers 36 aufgenommen (Figur 10), so dass er nicht mehr in der Schwenkkulisse 40 beweglich ist. Dann bilden die Kulissenfolger 41 die Schwenkachse 47, um die das Führungsgehäuse 32 schwenkt, wobei die Schwenkkulissen 38 an den Kulissenfolgern 39 geführt um die Schwenkachse 47 schwenken. Das ist als eine Schwenkbewegung 42 in Figur 2 angedeutet.

In der in der Figur 1 und 9 dargestellten Position hingegen sind die Kulissenfolger 39 blockiert, indem sie nämlich in Aufnahmen 48 des Kulissenkörpers 36 sozusagen gefangen sind. Dann schwenkt das Führungsgehäuse 32 um die durch die Kulissenfolger 39 definierte Schwenkachse 46. Das ist als eine Schwenkbewegung 50 in Figur 1 angedeutet.

Das Führungsgehäuse 32 und die Kulissenkörper 36 sind über Kulissenfolger 44 miteinander gekoppelt, die vor die Seitenwände 34 des Führungsgehäuses 32 vorstehen und in im Wesentlichen linear verlaufende Kulissen 43 der Kulissenkörper 36 eingreifen. In einer Bewegungsphase, bei der die Kulissenfolger 41 in den Aufnahmen 49 anliegen und die Kulissenfolger 39 in Längsendbereichen 51 der Schwenkkulisse 38 anliegen, bewegen sich die Kulissenfolger 44 in den Kulissen 43 hin und her, wobei der Kulissenkörper 36 eine Hoch-Tief-Bewegung durchläuft. Dadurch wird die Bewegung des Führungsgehäuses 32 sozusagen umgesteuert, d.h. dass die Kulissenfolger 39, 41 in Eingriff oder außer Eingriff mit den Aufnahmen 48, 49 gelangen.

Zur weiteren Bewegungssteuerung und als zusätzliche Sicherung dienen L-förmige Kulissen 52 an den Kulissenkörpern 36, in die von den Seitenwänden 34 des Führungsgehäuses 32 abstehende Kulissenfolger 53 eingreifen.

Ausgehend von der Gebrauchsstellung G schwenkt das Führungsgehäuse 32 und mit diesem der Kupplungsarm 20 zunächst um die untere Schwenkachse 46. Dann dreht sich der Kupplungsarm 20 um die Längsachse seines Lagerabschnitts 22, nämlich um eine Schwenkachse 54. Dabei rollt eine Verzahnung 55, die am Lagerabschnitt 22, vorzugsweise dessen freien Längsende, des Kupplungsarms 20 vorgesehen ist, an einer in der Zeichnung nicht sichtbaren, an der in Fahrzeuglängsrichtung vorderen Innenseite der Seitenwand 34 vorgesehenen Zahnreihe ab. Gleichzeitig wird die Steuerscheibe oder der Kulissenkörper 36 dabei umgesteuert, d.h. der Kulissenfolger 44 führt eine Linearbewegung 45 in der Kulisse 43 durch. Dadurch wird die Schwenkachse 46 sozusagen inaktiv und die andere Schwenkachse 47 aktiv, das heißt die unteren Kulissenfolger 39 kommen außer Eingriff mit den Aufnahmen 48, so dass der Kupplungsarm 20 bis in die in Figur 2 dargestellte Nichtgebrauchsstellung N nach oben unter den Stoßfänger S schwenkt.

Als Schwenkantrieb und zusätzlich als Fixierantrieb dient dabei ein Antrieb 60 der Anhängekupplung 10, 210. Der Antrieb 60 umfasst einen Antriebsmotor 61, zum Beispiel einen elektrischen Motor, der eine Spindel 62 über ein Getriebe 63 antreibt. Die Spindel 62 durchdringt den Fahrzeughaltekörper 120, 220 und steht bis zu einer Aufnahme 70 des Fahrzeughaltekörpers 120, 220 für den Kupplungsarm 20 vor.

Der Antriebsmotor 61 und das Getriebe 63 sind an einer Antriebshalterung 130 der Fahrzeughalterung 30, 230, vorliegend des Fahrzeughaltekörpers 120, 220, festgelegt. Von dort erstreckt sich die Spindel 62 bis zu der Aufnahme 70 vor.

Die Spindel 62 ist anhand einer Anlenkung 64 mit dem Kupplungsarm 20 verbunden. Dieser hat am Lagerabschnitt 22 eine Manschette 65, deren beiden Schenkel 67 den Lagerabschnitt 22 klammerartig umgreifen. Die Schenkel 67 sind mittels Schrauben 68 miteinander verbunden. In einem Zwischenraum 69 zwischen den Schenkeln 67 ist ein Bolzen 66 vorgesehen, der mit der Anlenkung 64 oder jedenfalls mit der Spindel 62 verbunden ist.

An der Aufnahme 70 , insbesondere am Fahrzeughaltekörper 12 0 , 220, ist eine Vertiefung oder Aufnahme 125 für die Manschette 65 vorgesehen.

Die Spindel 62 erfüllt die Funktion eines Zugelements oder Zugstabes, d.h. mit anderen Worten es könnte auch ein reiner Linearantrieb anstelle des als Drehantrieb ausgestalteten Antriebs 60 vorgesehen sein. Die Spindel 62 zieht den Kupplungsarm 20 sozusagen von der Nichtgebrauchsstellung N in die Gebrauchsstellung G in die Aufnahme 70 hinein, wobei die vorgenannten Drehbewegungen und Auf- und Ab-Bewegungen stattfinden bzw. drückt oder schiebt den Kupplungsarm 20 aus der Gebrauchsstellung G in die Nichtgebrauchsstellung N. Man erkennt, das zumindest in der Gebrauchsstellung G das Führungsgehäuse 32 und jedenfalls die Lageranordnung 31 keine tragende Rolle mehr haben. Vielmehr ist der Kupplungsarm 20 in der Gebrauchsstellung G im Wesentlichen durch die nachfolgenden Formschluss-Maßnahmen zuverlässig an der Fahrzeughalterung 30, 230 und ganz konkret am Fahrzeughaltekörper 120, 220 gehalten.

Eine Formschlussanordnung 80 einer Fixiereinrichtung 95 zwischen dem Kupplungsarm 20 und der Fahrzeughalterung 30, 230, insbesondere dem Fahrzeughaltekörper 120, 220 stellt einen zuverlässigen Halt des Kupplungsarms 20 in der Gebrauchsstellung sicher. Die Formschlussanordnung 80 umfasst als ein gekrümmtes erstes Formschlusselement 71 eine Kugel 73, die zum Eingriff in ein ebenfalls gekrümmtes erstes Gegen-Formschlusselement 72 vorgesehen ist, nämlich eine Kugelkalotte 74. Die Kugelkalotte 74 und das Gegen-Formschlusselement 72 sind am Kupplungsarm 20, nämlich dessen Lagerabschnitt 22 vorgesehen, während das dazu komplementäre Formschlusselement 71 an dem Fahrzeughaltekörper 120, 220 vorgesehen ist. Beispielsweise befindet sich die Kugel 73 in der Nähe der Unterseite 131 an der Aufnahme 70 für den Kupplungsarm 20.

Die Formschlussaufnahme oder das Gegen-Formschlusselement 72 ist unterhalb der Anlenkung 64, jedenfalls der Manschette 65 vorgesehen. Oberhalb der Anlenkung 64 und der Manschette 65 befinden sich weitere Formschlusskonturen, nämlich als ein zweites Gegen-Formschlusselement 82 ein Keilvorsprung 84 am Kupplungsarm 20. Dieser ist zum Eingriff in ein Formschlusselement 81 vorgesehen, das eine Keilaufnahme 83 am Fahrzeughaltekörper 120, 220 umfasst.

Die Keilaufnahme 83 umfasst einen Boden 78, von dem sich Keilflächen 90 weg erstrecken, z.B. v-förmig. Der Keilvorsprung 84 hat eine frontale Stirnfläche 88, von der sich Keilflächen 89 weg erstrecken, ebenfalls v-förmig. Die Stirnfläche 88 liegt in der Regel nicht am Boden 78 an, außer beispielsweise bei einer Überbelastung oder bei einem Verschleiß nach längerem Betrieb der Anhängekupplung.

Beim Schwenken um die untere Schwenkachse 46 schwenkt der Kupplungsarm 20 mit seiner Kugelkalotte 74 sozusagen um die Kugel 73 herum, wobei die beiden Komponenten in Berührkontakt miteinander sein können, also eine Art Schwenklager 75 bilden, aber auch voneinander entfernt sein können. Jedenfalls dann, wenn die Kugelkalotte 74 formschlüssig mit der Kugel 73 ist und/oder auf der Kugel 73 aufliegt, nämlich der Gebrauchsstellung G, ist das Schwenklager 75 aktiv. Dann kann dieses sozusagen eine Lagerbasis für einen durch den Lagerabschnitt 22 gebildeten Hebel bilden, an dessen freiem Längsende sozusagen der Keilvorsprung 84 vorgesehen ist. Die auf Zug arbeitende Spindel 62 zieht sozusagen die Keilflächen 89 des Keilvorsprung 84 in Eingriff mit der Keilaufnahme 83 bzw. deren Keilflächen 90, wodurch der Kupplungsarm 20 sehr fest in die Fahrzeughalterung 30, 230 gespannt ist.

Die Keilflächen 89, 90 verlaufen etwa in Fahrzeugquerrichtung des Kraftfahrzeugs F, das heißt ihre Normalenrichtung ist etwa in Fahrzeuglängsrichtung des Kraftfahrzeugs F orientiert.

Die Keilflächen 89, 90 wirken also in X-Richtung, während die Abstützung in Z-Richtung durch das Formschlusselement 71 und das Gegen-Formschlusselement 72 geleistet wird.

Das Formschlusselement 71 und das Gegen-Formschlusselement 72 stützen auch in x-Richtung.

Eine Abstützung in x-Richtung, z.B. bei Überlast oder besonders starker Belastung, insbesondere Stoßbelastung, erfolgt aber auch durch Stützschultern 127, die den Kupplungsarm 20 im Bereich der Kugel 73 abstützen und eine Aufnahme für den Kupplungsarm 20 definieren.

Unterhalb der Keilflächen 89 sind Stützflächen 91, 92 vorgesehen, die sich insbesondere bei Überlast oder besonders starker Belastung, insbesondere Stoßbelastung, des Kupplungsarms 20 in Z-Richtung, an Gegen-Stützflächen 93, 94 der Fahrzeughalterung 30, 230 abstützen. Die Gegen-Stützflächen 93, 94 sind beispielsweise an seitlich vor die Frontseite 124 des Fahrzeughaltekörpers 120, 220 vorstehenden Stützschultern 129, 133 vorgesehen. Die Stützschultern 129, 133 befinden sich an einem oberen Vorsprung 128, der im wesentlichen die Formschlussanordnung mit dem zweiten Formschlusselement 81 aufnimmt.

Die Stützflächen 92, 91 sind unterschiedlich hoch bezüglich der Längsachsrichtung des Lagerabschnitts 22, vorliegend also der Schwenkachse 54 oder der Z-Achse in der Gebrauchsstellung G. Das ist eine optionale, nicht zwingende Maßnahme. Jedenfalls stützen die Stützflächen 91, 92 zusammen mit den Gegen-Stützflächen 93, 94 den Kupplungsarm 20 gegen ein Verkippen bezüglich der Fahrzeughalterung 30, 230 zusätzlich ab.

Damit der Keilvorsprung 84 sozusagen leicht in die Keilaufnahme 83 hinein findet, sind vorn, d.h. an seiner Schmalseite, Einführschrägen 85 vorgesehen.

Die kugelige Gestalt des Formschlusselements 71 bedingt, dass diese gekrümmte Schrägflächen 76 aufweist, die mit Schrägflächen 77, nämlich den Innenseiten der Kugelkalotte 74 zusammenwirken. Ein Querabstand zwischen den Schrägflächen 77 und 76 ist größer als ein Querabstand zwischen den Keilflächen 89, 90. Die Schrägflächen 76 und 77 haben also in der Fixierstellung ein vergleichsweise größeres Spiel relativ zueinander als die Keilflächen 89 und 90.

Zudem sind die Keilflächen 89, 90 bezüglich einer Zugachsrichtung des Zugelements des Fixier-Antriebs 60, nämlich der Längsachse der Spindel 62, die zugleich eine Stellachse 86 darstellt, flacher geneigt als Schrägflächen 76, 77.

Auch das Befestigungskonzept der Anhängekupplungen 10, 210 ist solide und zugleich einfach handhabbar.

Der Fahrzeughaltekörper 120, 220 hat an seiner Oberseite 132, d.h. dem Querträger 12 zugewandt, eine Fahrzeughalter-Montagefläche 121, 221. Diese liegt an der unteren Wand 16 des Querträgers 12 flächig an und wird von der unteren Wand 16 abgestützt.

Der Fahrzeughaltekörper 120, 220 ist mit dem Querträger 12 verschraubt. Dazu ist ein Schraubbolzen 140, 240 vorgesehen, der von der Fahrzeughalter-Montagefläche 121, 221 absteht und den Querträger 12 durchdringt.

Bei der Anhängekupplung 10 ist der Schraubbolzen 140 einstückig mit dem Fahrzeughaltekörper 120 oder jedenfalls fest an diesem festgelegt und hat an seinem freien Längsendbereich ein Schraubgewinde, auf das eine Mutter 141 aufschraubbar ist.

Der Schraubbolzen 240 der Anhängekupplung 210 hat einen Kopf 241 und ist mit seinem dem Kopf 241 entgegengesetzten Längsende in eine Schraubaufnahme 242 des Fahrzeughaltekörpers 220 eingeschraubt. Die Schraubaufnahme 242 befindet sich an der Fahrzeughalter-Montagefläche 221

Damit die beiden Schraubbolzen 140, 240 den Querträger 12 nicht zusammen drücken, ist in dessen Innenraum 19 ein Distanzelement 143, 243 angeordnet, dessen unteres Längsende 144 sich an der Innenseite 145 der Wand 16 abstützt. Das Längsende 144 des als Distanzhülse ausgestalteten Distanzelements 143 stützt sich dabei an demjenigen Wandabschnitt der Wand 16 ab, der eine Durchtrittsöffnung 147 für den Schraubbolzen 140, 240 begrenzt.

Das andere Längsende 148 des Distanzelements 143, 243 durchdringt eine Durchtrittsöffnung 149 an der oberen Wand 15 und steht fast bis zu deren Oberseite 150 nach oben vor oder ist allenfalls flächig bündig mit deren Oberseite 150.

Somit stützt sich also die Mutter 141 oder der Kopf 241 zum einen am Längsende 148 und zum andern an der eine Querträger-Stützfläche 152 bildenden Oberseite des Querträgers 12 ab. An der Unterseite des Querträgers 12, die eine weitere Querträger-Stützfläche 151 darstellt, ist die Fahrzeughalter-Montagefläche 121, 221 abgestützt.

Eine weitere Kraftverteilung des Kopfes 241 oder der Mutter 141 ist vorteilhaft, wofür beispielsweise eine Unterlegscheibe 153, 253 vorzugsweise vorgesehen ist.

Damit sich die Fahrzeughalterung 30, 230 nicht um die Längsachse 146 des Schraubbolzens 140, 240 verdrehen kann, ist als eine Verdrehsicherung 155 ein Verdrehsicherungsvorsprung 156 vorgesehen. Der Verdrehsicherungsvorsprung 156 ist beispielsweise durch einen Bolzenkörper 157 gebildet, der in eine Aufnahme 158 an der Fahrzeughalter-Montagefläche 121, 221 eingepresst und/oder eingeschraubt und/oder eingeklebt ist. Der Verdrehsicherungsvorsprung 156 greift in eine Verdrehsicherungsaufnahme 159, beispielsweise eine Durchtrittsöffnung, an der Querträger-Stützfläche 151, nämlich der unteren Wand 16 ein. Vorzugsweise durchdringt der Verdrehsicherungsvorsprung 156 diese Wand 16, was einen besonders sicheren Halt darstellt.

Man kann sich ohne weiteres vorstellen, dass beispielsweise eine Formschlussstruktur 160, zum Beispiel an der Fahrzeughalter-Montagefläche 221, vorgesehen ist, die mit einer in der Zeichnung nicht sichtbaren, komplementären Formschlussstruktur an der Querträger-Stützfläche 151, zum Beispiel einer Riffelung oder dergleichen, im Sinne einer Verdrehsicherung zusammen wirkt.

An der Fahrzeughalter-Montagefläche 221 kann auch eine Umfangskontur 161 zur formschlüssigen und somit verdrehsicheren Aufnahme des Querträgers 12 vorgesehen sein.

## Patentansprüche

1. Anhängekupplung für ein Kraftfahrzeug (F), mit einem Kupplungsarm (20) zum Ankuppeln eines Anhängers oder eines Hecklastenträgers, und mit einer an dem Kraftfahrzeug (F) befestigbaren oder befestigten Fahrzeughalterung (30; 230) zum Halten des Kupplungsarms (20) in einer zum Anhängen des Anhängers oder Tragen des Hecklastenträgers vorgesehenen Gebrauchsstellung (G), und mit einer mindestens einen Querträger (12) aufweisenden und zur Befestigung am Heck (H) des Kraftfahrzeugs (F) vorgesehenen Trägeranordnung (11), wobei die Fahrzeughalterung (30; 230) einen Fahrzeughaltekörper (120; 220) aufweist, der mit der Trägeranordnung (11) verschraubt ist, wobei ein einziger Schraubbolzen (140; 240) vorgesehen ist, der eine Fahrzeughalter-Montagefläche (121; 221) des Fahrzeughalters gegen eine erste Querträger-Stützfläche (151) spannt, wobei der Schraubbolzen (140; 240) den Querträger (12) durchsetzt und sich ein Kopf (241) des Schraubbolzens (140; 240) oder eine auf den Schraubbolzen (140; 240) aufgeschraubte Mutter (141) an einer zweiten Querträger-Stützfläche (152) des Querträgers (12) an seiner von dem Fahrzeughaltekörper (120; 220) abgewandten Seite abstützt, und wobei exzentrisch zu einer Längsachse (146) des Schraubbolzens (140; 240) zwischen dem Fahrzeughaltekörper (120; 220) und dem Querträger (12) eine Verdrehsicherung (155) vorgesehen ist, die einer Verdrehung des Fahrzeughaltekörpers (120; 220) gegenüber dem Querträger (12) um die Längsachse (146) des Schraubbolzens (140; 240) entgegenwirkt, **dadurch gekennzeichnet, dass** sie ein Distanzelement (143; 243) umfasst, das sich mit seinem ersten Längsende (144) an einer Innenseite einer ersten Wand des Querträgers (12), welche die erste Querträger-Stützfläche (151) bereitstellt, abstützt und die mit seinem anderen, zweiten Längsende (148) den Kopf (241) des Schraubbolzens (140; 240) oder die aufgeschraubte Mutter (141) abstützt, wobei das zweite Längsende (148) mit der zweiten Querträger-Stützfläche (152) fluchtet oder unwesentlich hinter die zweite Querträger-Stützfläche (152) zurück steht, so dass sich der Kopf (241) oder die Mutter (141) neben dem zweiten Längsende (148) des Distanzelements (143; 243) an der zweiten Querträger-Stützfläche (152) abstützt.

2. Anhängekupplung nach Anspruch 1, **dadurch gekennzeichnet, dass** die Verdrehsicherung (155) einen bolzenartigen Verdrehsicherungsvorsprung (156) umfasst, der sich zwischen dem Querträger (12) und dem Fahrzeughaltekörper (120; 220) erstreckt.

3. Anhängekupplung nach Anspruch 1 oder 2, **dadurch gekennzeichnet, dass** der Verdrehsicherungsvorsprung (156) eine die erste Querträger-Stützfläche (151) bereitstellende Wand (16) des Querträgers (12) durchdringt oder in die Wand (16) eindringt.

4. Anhängekupplung nach einem der vorhergehenden Ansprüche, **dadurch gekennzeichnet, dass** der Verdrehsicherungsvorsprung (156) in die Fahrzeughalter-Montagefläche (121; 221) eingesteckt oder eingepresst oder eingeschraubt ist.

5. Anhängekupplung nach einem der vorhergehenden Ansprüche, **dadurch gekennzeichnet, dass** die Verdrehsicherung (155) Verdrehsicherungsformschlusskonturen, insbesondere Formschlussstrukturen (160), an der Fahrzeughalter-Montagefläche (121; 221) und/oder der der Fahrzeughalter-Montagefläche (121; 221) zugewandten ersten Querträger-Stützfläche umfasst.

6. Anhängekupplung nach einem der vorhergehenden Ansprüche, **dadurch gekennzeichnet, dass** die Verdrehsicherung (155) an dem Querträger (12) und der Fahrzeughalterung (30; 230) angeordnete Umfangskonturen (161), insbesondere eine Vertiefung an der Fahrzeughalter-Montagefläche (121; 221) zur formschlüssigen Aufnahme des Querträgers (12), umfasst, die formschlüssig ineinander greifen.

7. Anhängekupplung nach einem der vorhergehenden Ansprüche, **dadurch gekennzeichnet, dass** das Distanzelement (143; 243) eine Distanzhülse ist.

8. Anhängekupplung nach einem der vorhergehenden Ansprüche, **dadurch gekennzeichnet, dass** an der Fahrzeughalter-Montagefläche (121; 221) eine Aufnahme, insbesondere eine Schraubaufnahme (242), für den Schraubbolzen (140; 240) vorgesehen ist.

9. Anhängekupplung nach einem der vorhergehenden Ansprüche, **dadurch gekennzeichnet, dass** ein Durchmesser des Schraubbolzens (140; 240) mindestens der Hälfte, vorzugsweise mindestens zwei Drittel, der Querbreite der Fahrzeughalter-Montagefläche (121; 221) entspricht.

10. Anhängekupplung nach einem der vorhergehenden Ansprüche, **dadurch gekennzeichnet, dass** der Kupplungsarm (20) an der Fahrzeughalterung (30; 230) mittels einer Lageranordnung (31) zwischen der Gebrauchsstellung (G) und einer zum Kraftfahrzeug (F) näher hin verstellten Nichtgebrauchsstellung (N) um zumindest eine Schwenkachse (46, 47, 54) schwenkbar und/oder eine Stellachse verschieblich gelagert ist.

11. Anhängekupplung nach einem der vorhergehenden Ansprüche, **dadurch gekennzeichnet, dass** sie eine Führungsanordnung (33), insbesondere eine Kulissenführung, zur Führung des Kupplungsarms (20) zwischen der Gebrauchsstellung (G) und der Nichtgebrauchsstellung (N) aufweist.

12. Anhängekupplung nach einem der vorhergehenden Ansprüche, **dadurch gekennzeichnet, dass** die Führungsanordnung (33) ein Führungsgehäuse (32), insbesondere einen Kulissenkasten, umfasst.

13. Anhängekupplung nach einem der vorhergehenden Ansprüche, **dadurch gekennzeichnet, dass** der Kupplungsarm (20) lösbar an der Fahrzeughalterung (30; 230) angeordnet ist, insbesondere dass die Fahrzeughalterung (30; 230) eine Steckaufnahme zum Anstecken oder Einstecken des Kupplungsarms (20) aufweist.

14. Anhängekupplung nach einem der vorhergehenden Ansprüche, **dadurch gekennzeichnet, dass** der Fahrzeughaltekörper (120; 220) in der Art eines Halteblocks ausgestaltet ist.

## Claims

1. Trailer coupling for a motor vehicle (F), with a coupling arm (20) for attaching a trailer or a rear load carrier, and with a vehicle holder (30; 230) which is or may be fastened to the motor vehicle (F), for holding the coupling arm (20) in a position of use (G) provided for attaching the trailer or supporting the rear load carrier, and with a support assembly (11) with at least one cross-member (12) and provided for fastening at the rear (H) of the motor vehicle (F), wherein the vehicle holder (30; 230) has a vehicle holder body (120; 220) which is bolted to the support assembly (11), wherein a single bolt (140; 240) is provided which clamps a vehicle holder mounting face (121; 221) of the vehicle holder against a first cross-member support face (151), wherein the bolt (140; 240) passes through the cross-member (12) and a head (241) of the bolt (140; 240) or a nut (141) screwed on to the bolt (140; 240) rests on a second cross-member support face (152) of the cross-member (12) on its side facing away from the vehicle holder body (120; 220), and wherein there is provided eccentrically to a longitudinal axis (146) of the bolt (140; 240), between the vehicle holder body (120; 220) and the cross-member (12), an anti-twist lock (155) which counteracts any rotation of the vehicle holder body (120; 220) relative to the cross-member (12) around the longitudinal axis (146) of the bolt (140; 240), **characterised in that** it includes a spacer element (143; 243) which rests with its first longitudinal end (144) on an inner side of a first wall of the cross-member (12), which provides the first cross-member support face (151), and with its other, second longitudinal end (148) supports the head (241) of the bolt (140; 240) or the screwed-on nut (141), wherein the second longitudinal end (148) with the second cross-member support face (152) is flush with or only insignificantly behind the second cross-member support face (152), so that the head (241) or the nut (141) rest on the second cross-member support face (152) next to the second longitudinal end (148) of the spacer element (143; 243).

2. Trailer coupling according to claim 1, **characterised in that** the anti-twist lock (155) includes a pin-like anti-twist lock projection (156), which extends between the cross-member (12) and the vehicle holder body (120; 220).

3. Trailer coupling according to claim 1 or 2, **characterised in that** the anti-twist lock projection (156) passes through a wall (16) of the cross-member (12) providing the first cross-member support face (151) or penetrates the wall (16).

4. Trailer coupling according to any of the preceding claims, **characterised in that** the anti-twist lock projection (156) is inserted or pressed or screwed into the vehicle holder mounting face (121; 221).

5. Trailer coupling according to any of the preceding claims, **characterised in that** the anti-twist lock (155) includes anti-twist interlocking contours , in particular interlocking structures (160), on the vehicle holder mounting face (121; 221) and/or the first cross-member support face which faces towards the vehicle holder mounting face (121; 221).

6. Trailer coupling according to any of the preceding claims, **characterised in that** the anti-twist lock (155) includes peripheral contours (161) provided on the cross-member (12) and the vehicle holder (30; 230), in particular a recess on the vehicle holder mounting face (121; 221) for positive location of the cross-member (12), which engage positively in one another.

7. Trailer coupling according to any of the preceding claims, **characterised in that** the spacer element (143; 243) is a spacer sleeve.

8. Trailer coupling according to any of the preceding claims, **characterised in that** a socket, in particular a screw socket (242), is provided on the vehicle holder mounting face (121; 221) for the bolt (140; 240).

9. Trailer coupling according to any of the preceding claims, **characterised in that** a diameter of the bolt (140; 240) corresponds to at least half, preferably at least two thirds, of the lateral width of the vehicle holder mounting face (121; 221).

10. Trailer coupling according to any of the preceding claims, **characterised in that** the coupling arm (20) is mounted on the vehicle holder (30; 230) by means of a bearing assembly (31), between the position of use (G) and an inoperative position (N) closer to the motor vehicle (F), so as to be pivotable around at least one swivel axis (46, 47, 54) and/or movable on an adjusting axis.

11. Trailer coupling according to any of the preceding claims, **characterised in that** it has a guide assembly (33), in particular a slotted link guide, for guiding the coupling arm (20) between the position of use (G) and the inoperative position (N).

12. Trailer coupling according to any of the preceding claims, **characterised in that** the guide assembly (33) includes a guide housing (32), in particular a slotted link box.

13. Trailer coupling according to any of the preceding claims, **characterised in that** the coupling arm (20) is fitted releasably to the vehicle holder (30; 230), in particular that the vehicle holder (30; 230) has a plug-in socket for attaching or plugging in the coupling arm (20).

14. Trailer coupling according to any of the preceding claims, **characterised in that** the vehicle holder body (120; 220) is in the form of a retaining block.

## Revendications

1. Attelage de remorque pour un véhicule automobile (F), comprenant un bras d'attelage (20) servant à accoupler une remorque ou un support de charges arrière, et comprenant une fixation de véhicule (30 ; 230) pouvant être fixée ou fixée au niveau du véhicule automobile (F), servant à maintenir le bras d'attelage (20) dans une position d'utilisation (G) prévue afin d'atteler la remorque ou de supporter le support de charges arrière, et comprenant un ensemble de support (11) présentant au moins un support transversal (12) et prévu aux fins de la fixation au niveau de l'arrière (H) du véhicule automobile (F), dans lequel la fixation de véhicule (30 ; 230) présente un corps de maintien de véhicule (120 ; 220), qui est vissé à l'ensemble de support (11), dans lequel un unique boulon fileté (140 ; 240) est prévu, lequel serre une surface de montage de système de maintien de véhicule (121 ; 221) du système de maintien de véhicule contre une première surface d'appui de support transversal (151), dans lequel le boulon fileté (140 ; 240) traverse le support transversal (12) et une tête (241) du boulon fileté (140 ; 240) ou un écrou (141) vissé sur le boulon fileté (140 ; 240) prend appui au niveau d'une deuxième surface d'appui de support transversal (152) du support transversal (12) au niveau de son côté opposé au corps de maintien de véhicule (120 ; 220), et dans lequel est prévu, de manière excentrique par rapport à un axe longitudinal (146) du boulon fileté (140 ; 240) entre le corps de maintien de véhicule (120 ; 220) et le support transversal (12), un système anti-rotation (155), qui contrecarre une rotation du corps de maintien de véhicule (120 ; 220) par rapport au support transversal (12) autour de l'axe longitudinal (146) du boulon fileté (140 ; 240), **caractérisé en ce qu'**il comprend un élément d'écartement (143 ; 243), qui prend appui, par sa première extrémité longitudinale (144), au niveau d'un côté intérieur d'une première paroi de support transversal (12), qui fournit la première surface d'appui de support transversal (151) et qui soutient, par son autre deuxième extrémité longitudinale (148), la tête (241) du boulon fileté (140 ; 240) ou l'écrou (141) vissé, dans lequel la deuxième extrémité longitudinale (148) est alignée avec la deuxième surface d'appui de support transversal (152) ou est en retrait légèrement derrière la deuxième surface d'appui de support transversal (152) de sorte que la tête (241) ou l'écrou (141) à côté de la deuxième extrémité longitudinale (148) de l'élément d'écartement (143 ; 243) prenne appui au niveau de la deuxième surface d'appui de support transversal (152).

2. Attelage de remorque selon la revendication 1, **caractérisé en ce que** le système anti-rotation (155) comprend une partie faisant saillie de système anti-rotation (156), qui s'étend entre le support transversal (12) et le corps de maintien de véhicule (120 ; 220).

3. Attelage de remorque selon la revendication 1 ou 2, **caractérisé en ce que** la partie faisant saillie de système anti-rotation (156) traverse une paroi (16), fournissant la première surface d'appui de support transversal (151), du support transversal (12) ou pénètre la paroi (16).

4. Attelage de remorque selon l'une quelconque des revendications précédentes, **caractérisé en ce que** la partie faisant saillie de sécurité anti-rotation (156) est enfichée ou pressée ou vissée dans la surface de montage de système de maintien de véhicule (121 ; 221).

5. Attelage de remorque selon l'une quelconque des revendications précédentes, **caractérisé en ce que** le système anti-rotation (155) comprend des contours à complémentarité de forme de système anti-rotation, en particulier des structures à complémentarité de forme (160), au niveau de la surface de montage de système de maintien de véhicule (121 ; 221) et/ou au niveau de la première surface d'appui de support transversal tournée vers la surface de montage de système de support de véhicule (121 ; 221).

6. Attelage de remorque selon l'une quelconque des revendications précédentes, **caractérisé en ce que** le système anti-rotation (155) comprend des contours périphériques (161) disposés au niveau du support transversal (12) et au niveau de la fixation de véhicule (30 ; 230), en particulier un renfoncement au niveau de la surface de montage de système de maintien de véhicule (121 ; 221), servant à recevoir par complémentarité de forme le support transversal (12), lesquels contours périphériques s'engagent les uns dans les autres par complémentarité de forme.

7. Attelage de remorque selon l'une quelconque des revendications précédentes, **caractérisé en ce que** l'élément d'écartement (143 ; 243) est une douille d'écartement.

8. Attelage de remorque selon l'une quelconque des revendications précédentes, **caractérisé en ce qu'**un logement, en particulier un logement de vis (242), est prévu pour le boulon fileté (140 ; 240) au niveau de la surface de montage de système de maintien de véhicule (121 ; 221).

9. Attelage de remorque selon l'une quelconque des revendications précédentes, **caractérisé en ce qu'**un diamètre du boulon fileté (140 ; 240) correspond au moins à la moitié, de préférence au moins à deux tiers, de la largeur transversale de la surface de montage de système de maintien de véhicule (121 ; 221).

10. Attelage de remorque selon l'une quelconque des revendications précédentes, **caractérisé en ce que** le bras d'attelage (20) est monté au niveau de la fixation de véhicule (30 ; 230) au moyen d'un ensemble de paliers (31) de manière à pouvoir pivoter autour au moins d'un axe de pivotement (46, 47, 54) et/ou de manière à pouvoir coulisser autour d'un axe de réglage entre la position d'utilisation (G) et une position de non-utilisation (N) déplacée davantage à proximité du véhicule automobile (F).

11. Attelage de remorque selon l'une quelconque des revendications précédentes, **caractérisé en ce qu'**il présente un ensemble de guidage (33), en particulier un guidage à coulisse, servant à guider le bras d'attelage (20) entre la position d'utilisation (G) et la position de non-utilisation (N).

12. Attelage de remorque selon l'une quelconque des revendications précédentes, **caractérisé en ce que** l'ensemble de guidage (33) comprend un boîtier de guidage (32), en particulier un coffre à coulisse.

13. Attelage de remorque selon l'une quelconque des revendications précédentes, **caractérisé en ce que** le bras d'attelage (20) est disposé de manière amovible au niveau de la fixation de véhicule (30 ; 230), en particulier en ce que la fixation de véhicule (30 ; 230) présente un logement d'enfichage servant à attacher par enfichage ou introduire par enfichage le bras d'attelage (20).

14. Attelage de remorque selon l'une quelconque des revendications précédentes, **caractérisé en ce que** le corps de maintien de véhicule (120 ; 220) est configuré à la manière d'un bloc de maintien.
